# FASCICULE DE BREVET EUROPEEN

(11) **EP 0 592 330 B1**
(45) Date de publication et mention de la délivrance du brevet: **26.05.1999**
(21) Numéro de dépôt: 93402512.3
(22) Date de dépôt: 11.10.1993
(51) Int. Cl.: H04Q 11/00

(54) **Réseau de transmission optique avec matrice de commutation**
Optisches Übertragungsnetzwerk mit Schaltmatrix
Optical transmission network with switching matrix

(30) Priorité: 09.10.1992 FR 9212018
(43) Date de publication de la demande: 13.04.1994
(73) Titulaire: Alcatel, 75382 Paris Cédex 08 (FR)
(72) Inventeur: Sotom, Michel, F-91140 Villebon-Sur-Yvette (FR); Jourdan, Amaury, F-91600 Savigny-Sur-Orge (FR); Le Roy, Guy, F-22300 Lannion (FR)
(74) Mandataire: Sciaux, Edmond

(56) Documents cités:
- EP-A- 0 492 852
- WO-A-92/10770
- PROCEEDINGS, IEEE CONFERENCE ON COMPUTER COMMUNICATIONS (INFOCOM '88), 27-28 MARS 1988, PAGES 354-361, NEW ORLEANS US , XP44787 G.R.HILL 'A Wavelength Routing Approach to Optical Communications Networks'
- IEEE JOURNAL ON SELECTED AREAS IN COMMUNICATION vol. 8, no. 6 , Aoüt 1990 , NEW YORK US pages 948 - 964 XP208590 C.A. BRACKETT 'Dense Wavelength Division Multiplexing Networks: Principles and Applications'
- PROCEEDINGS, INTERNATIONAL SWITCHING SYMPOSIUM, 27 MAI-1 JUIN 1990, VOL.III PAGES 21-26, STOCKHOLM SE , XP130869 A.M. HILL 'A Distributed Wavelength Switching Architecture for the TPON Local Network'
- ELECTRONICS LETTERS vol. 23, no. 16 , 30 Juillet 1987 , STEVENAGE GB pages 824 - 826 H. KOBRINSKI ET AL 'Demonstration of High Capacity in the Lambdanet Architecture: a Multiwavelength Optical Network'
- BBC RESEARCH DEPARTMENT REPORT no. 3 , Mars 1988 , TADWORTH GB pages 1 - 31 R.P. MARSDEN ET AL 'Digital Television Routing Systems: a Survey of Optical and Electrical Techniques'
- ELECTRONICS LETTERS vol. 28, no. 13 , 18 Juin 1992 , STEVENAGE GB pages 1268 - 1270 XP301528 H. OBARA ET AL 'Star Coupler Based WDM Switch Employing Tunable Device with Reduced Tunability Range'
- IEEE TRANSACTIONS ON PARALLEL AND DISTRIBUTED SYSTEMS vol. 1, no. 2 , Mai 1990 , NEW YORK US pages 47 - 53 XP128311 M. FUJIWARA ET AL 'Line Capacity Expansion Schemes in Photonic Switching'

## Description

La présente invention concerne des réseaux de transmission d'information dans lesquels des communications sont assurées entre des noeuds de ce réseau par des ondes porteuses optiques portant des informations et guidées par des fibres optiques.

Dans de tels réseaux il est habituellement nécessaire d'assurer des fonctions de routage permettant de transmettre à chaque usager les seules informations qui lui sont destinées. Ces fonctions de routage pouvant être avantageusement assurées par des matrices de commutation optique qui, selon une disposition connue, sont chacune incluse dans un noeud du réseau.

La réalisation de tels réseaux incluant de telles matrices est coûteuse et peut devenir impossible lorsque le nombre des usagers augmente et oblige à prévoir des capacités accrues pour ces matrices, cette capacité étant définie par le nombre des entrées et celui des sorties d'une matrice.

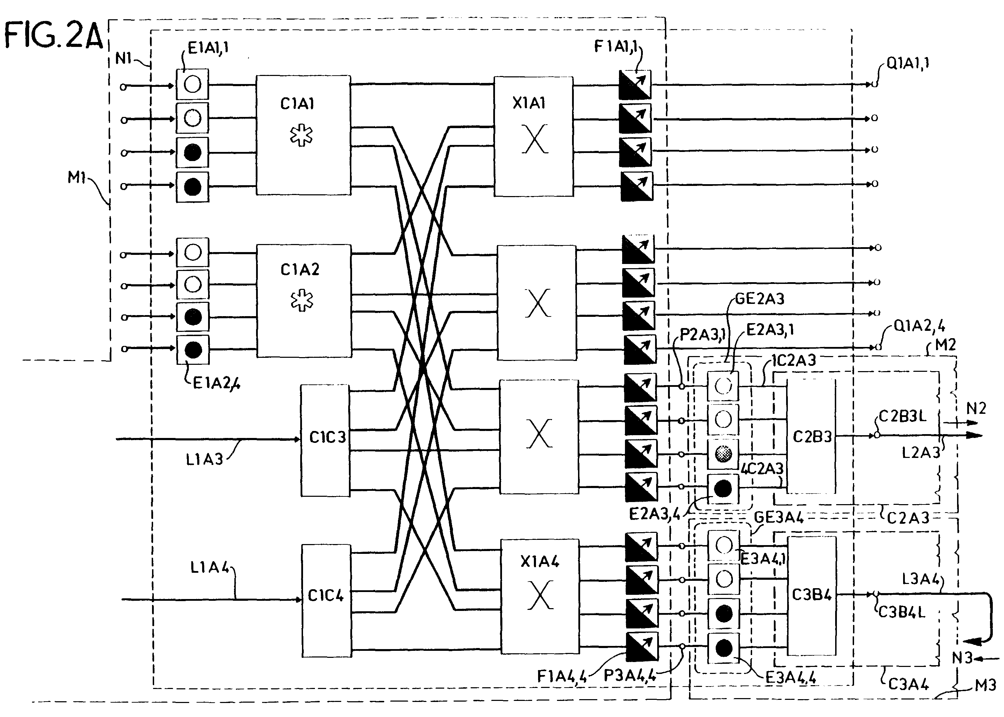

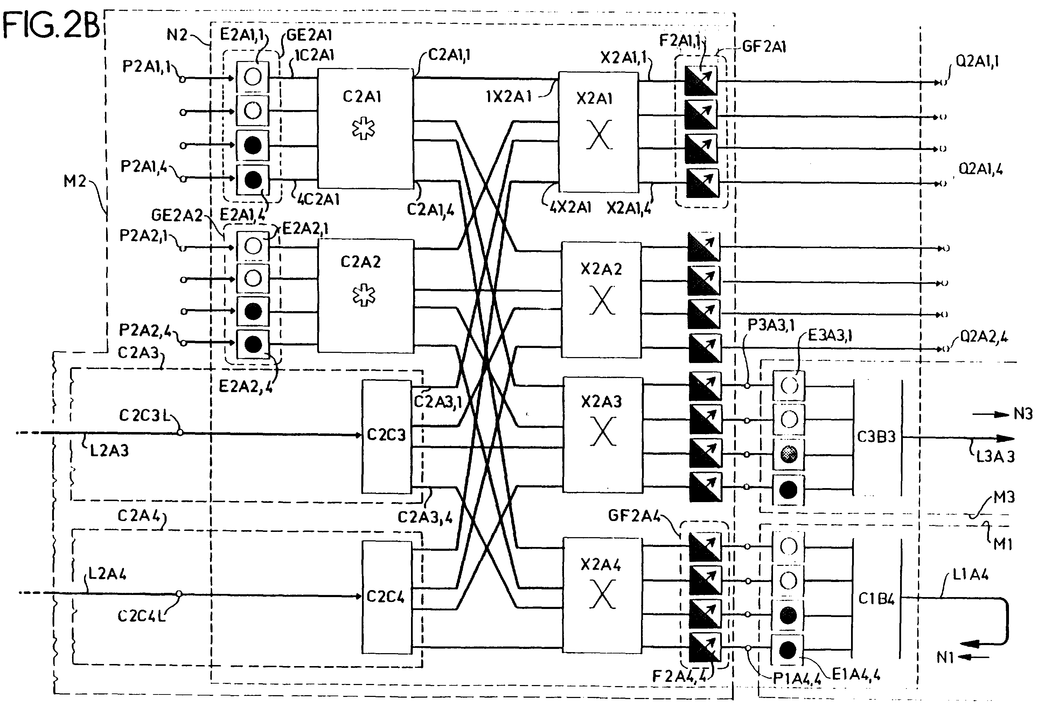

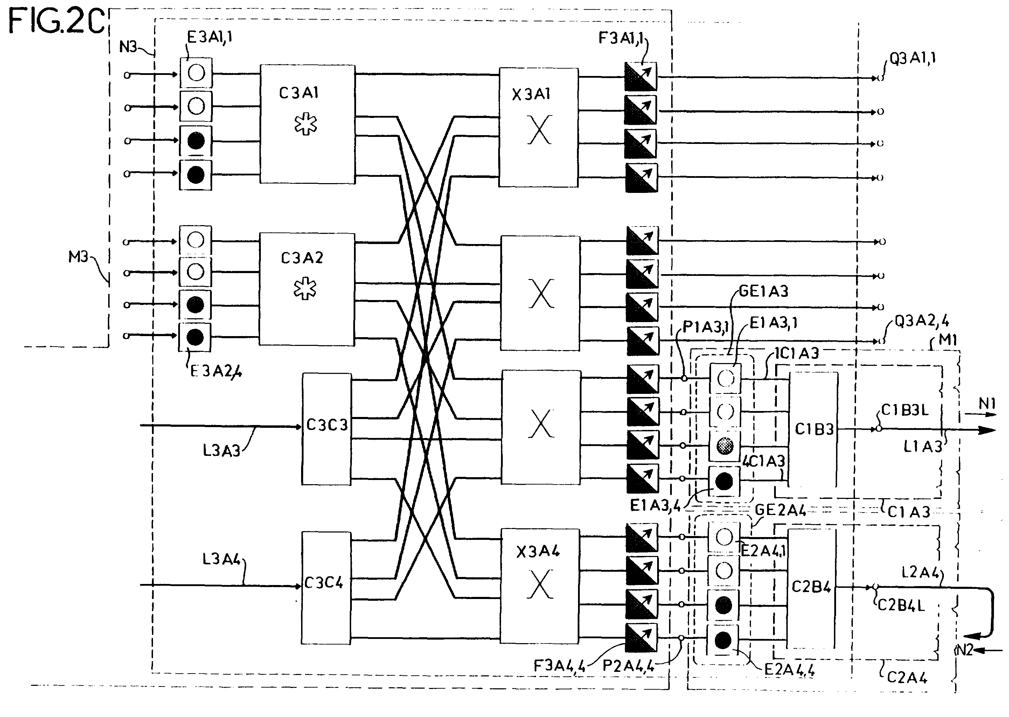

C'est notamment pourquoi le document de brevet WO-A-92/10770 propose un réseau de transmission optique avec une matrice de commutation (voir les figures 2 et 3) comportant un ensemble d'émetteurs, un ensemble de récepteurs, et un raccordement de distributeurs actifs et passifs (voir la figure 3).

Un autre document : Proceedings, international switching symposium, 28 mai-1 Juin 1990, vol. III, pages 21-26, Stockholm, A.M. Hill et al, décrit une matrice de commutation optique (voir la figure 3) comportant un groupe de distributeurs passifs raccordés à un groupe de distributeurs actifs.

La présente invention a notamment pour buts de permettre de réaliser simplement et économiquement un réseau de transmission de ce genre, et de permettre l'utilisation de ce réseau par des usagers en nombre accru.

Dans ces buts elle a pour objet un réseau de transmission pour transmettre des informations entre des ports de communication pouvant être reliés à des abonnés à ce réseau, à l'aide d'ondes porteuses optiques guidées présentant une succession de longueurs d'onde porteuses, ce réseau comportant :
- une pluralité de noeuds comportant des organes pour assurer un routage commandé desdites ondes porteuses,
- et des fibres de liaison constituées par des fibres optiques pour transmettre entre ces noeuds des informations portées par des dites ondes porteuses guidées par ces fibres,
- chacun desdits noeuds comportant :
   - au moins une entrée de liaison et/ou au moins une sortie de liaison pour recevoir des informations d'un autre dit noeud et/ou pour émettre des informations vers un autre dit noeud par l'intermédiaire d'une dite fibre de liaison, respectivement,
   - certains au moins desdits noeuds étant des noeuds à accès local comportant en outre au moins une entrée locale et/ou au moins une sortie locale pour constituer au moins un dit port de communication,
   certains desdits organes des noeuds de ce réseau étant commandés pour définir pour lesdites informations des routes s'étendant chacune d'une extrémité amont constituée par une dite entrée locale recevant cette information à une extrémité aval constituée par une dite sortie locale sur laquelle cette information doit être restituée par ce réseau de sorte que l'ensemble de ces organes constitue au moins une matrice de commutation de ce réseau, cette matrice comportant :
   - un ensemble d'émetteurs recevant des informations à transmettre et ayant des longueurs d'onde sur lesquelles ils émettent des ondes portant ces informations,
   - un ensemble de filtres ayant eux aussi des longueurs d'onde et transmettant chacun sélectivement en sortie de cette matrice les ondes dont la longueur d'onde est égale à sa longueur d'onde, les longueurs d'onde de ces filtres étant commandées,
   - et un ensemble de distribution pour raccorder ces filtres à ces émetteurs de manière que ledit routage commandé puisse être assuré avec l'aide d'une commande des longeurs d'onde de ces filtres,
   ce réseau étant caractérisé par le fait qu'au moins une dite matrice de commutation de ce réseau est une matrice composite dont ledit ensemble de distribution comporte :
   - un groupe de distributeurs passifs, ces distributeurs étant constitués par des coupleurs en étoile et raccordant chacun en permanence chacune de ses entrées à toutes ses sorties, ce groupe de distributeurs passifs étant raccordé audit ensemble d'émetteurs
   - et un groupe de distributeurs actifs du type appelé parfois matrice de commutation spatiale et aptes chacun à raccorder chacune de ses entrées à une sortie sélectionnée par une commande de ce distributeur, chacune des sorties de ce distributeur pouvant être sélectionnée, ce groupe de distributeurs actifs étant raccordé audit groupe de distributeurs passifs, ledit ensemble de filtres étant raccordé à ce groupe de distributeurs actifs,
   - au moins une dite matrice composite constituant une matrice éclatée comportant des organes inclus dans deux dits noeuds différents et raccordés par une dite fibre de liaison guidant des dites ondes porteuses présentant plusieurs dites longueurs d'onde porteuses différentes.

A l'aide des figures schématiques, ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

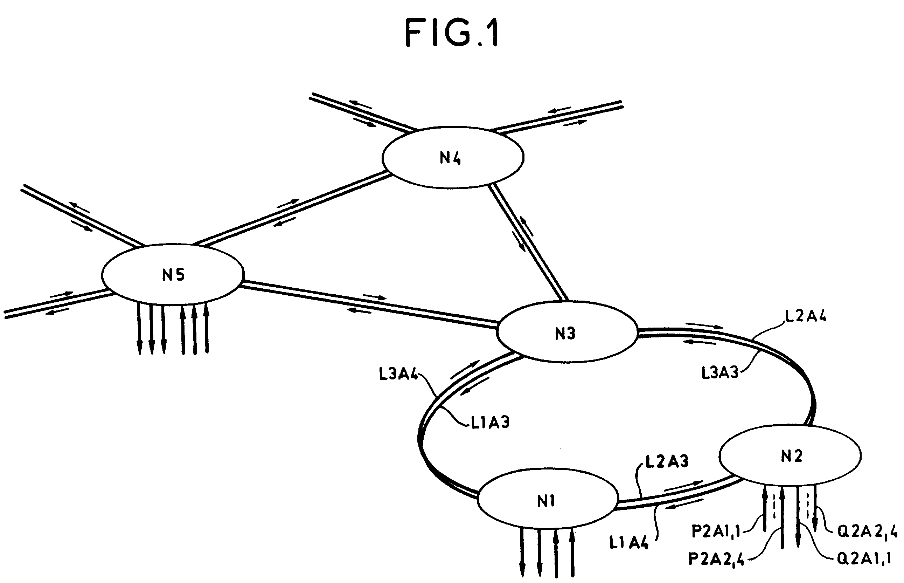

La figure 1 représente une vue d'ensemble d'un réseau selon l'invention.

Les figures 2A, 2B et 26 représentent des vues de trois noeuds de ce réseau.

Il doit être compris que de tels noeuds comportent en pratique de nombreux organes autres que ceux qui ont été représentés et décrits ci-après dans le seul but de faire comprendre l'invention.

Dans le seul but de simplifier la description ces trois noeuds N1, N2, N3 sont supposés être mutuellement identiques, de même que les trois matrices de commutation M1, M2, M3 qu'ils constituent. Lorsque deux organes appartenant à deux matrices différentes sont identiques et identiquement disposés ils sont désignés par les mêmes signes de référence sauf quant au premier chiffre après les lettres qui, pour chaque organe, est celui qui désigne la matrice à laquelle cet organe appartient. Par exemple un distributeur passif de la matrice M1 est désigné par la référence C1A2, le distributeur correspondant de la matrice M3 étant désigné par le signe de référence C3A2, le chiffre 2 après la deuxième lettre constituée par un A, un B ou un C indiquant qu'il s'agit dans les deux cas d'un deuxième distributeur. Quand le signe de référence d'un organe commence par une lettre et comporte trois chiffres, ce qui est le cas de l'émetteur E1A2,4 les premier et deuxième chiffres tel que 1 et 2 désignent respectivement la matrice et un groupe auxquels cet organe appartient et le troisième chiffre désigne un rang de cet organe dans ce groupe.

Conformément à la figure 2B notamment au moins ledit groupe de distributeurs actifs (X2A1...X2A4) et ledit ensemble de filtres (F2A1, 1, F2A4, 4) de ladite matrice éclatée (M2) sont contenus dans un dit noeud (N2) associé à cette matrice, cette matrice éclatée comportant :
- un ensemble d'émetteurs (E2A1,1...,E2A4,4) constitué par une succession de groupes d'émetteurs (GE2A1...GE2A4) dans laquelle ces groupes ont des rangs respectifs (1...4), chaque dit groupe d'émetteurs (GE2A1) étant constitué d'émetteurs (E2A1,1...E2A1,4) se succèdant et ayant des rangs respectifs (1...4) dans ce groupe, chaque dit émetteur étant muni d'une entrée (P2A1,1...P2A1,4) de même rang pour recevoir une dite information, cette entrée constituant une entrée de ladite matrice éclatée (M2), cet émetteur étant piloté par cette information pour émettre une onde optique portant cette information et présentant une dite longueur d'onde porteuse constituant une longueur d'onde de cet émetteur,
- un groupe de distributeurs passifs (C2A1, ..C2A4) formant une succession dans laquelle ces distributeurs ont des rangs respectifs (1...4), chaque dit distributeur passif (C2A1) comportant une succession d'entrées (1C2A1...4C2A1) ayant des rangs (1....4) dans cette succession et raccordées chacune à l'émetteur qui a le même rang que cette entrée et qui appartient au groupe d'émetteurs de même rang que ce distributeur, ce distributeur formant un mélange de toutes ces ondes et comportant encore des sorties (C2A1,1...C2A1,4), transmettant chacune un groupe d'ondes constitué par une fraction de ce mélange,
- et un groupe de distributeurs actifs (X2A1...X2A4) se succèdant en ayant des rangs respectifs (1...4) dans ce groupe, chacun de ces distributeurs actifs (X2A1) comportant une succession d'entrées (1X2A1...4X2A1) ayant des rangs (1...4) dans cette succession et raccordées chacune à une sortie d'un dit distributeur passif ayant le même rang que cette entrée, chacun de ces distributeurs actifs comportant encore une succession de sorties (X2A1,1...X2A1,4) dans laquelle ces sorties ont des rangs respectifs (1...4), ce distributeur actif étant commandé lorsqu'il reçoit un dit groupe d'ondes optiques sur une de ses entrées pour sélectionner au moins une de ses dites sorties et pour transmettre ce groupe d'ondes optiques par sa dite sortie sélectionnée,
- un ensemble de filtres (F2A1,1...F2A4,4) constitué par une succession de groupes de filtres (GF2A1...GF2A4) dans laquelle ces groupes ont des rangs respectifs (1...4), chaque dit groupe de filtres (GF2A1) étant constitué de filtres (F2A1,1...F2A1,4) se succèdant et ayant des rangs respectifs (1...4) dans ce groupe, chacun des filtres (F2A1,1) de ce groupe étant raccordé à une sortie ayant le même rang que ce filtre et appartenant à un dit distributeur actif (X2A1) ayant le même rang que ce groupe, chacun de ces filtres ayant une longueur d'onde commandée constituée par une dite longueur d'onde porteuse, et alimentant une dite sortie (Q2A1, 1) de ladite matrice éclatée (M2) pour transmettre sélectivement en sortie de cette matrice des ondes dont la longueur d'onde est celle de ce filtre, certains au moins desdits distributeurs passifs de cette matrice éclatée constituant des distributeurs éclatés (C2A3, C2A4), chaque dit distributeur éclaté (C2A3) comportant deux parties séparées constituant l'une un multiplexeur spectral (C2B3), l'autre un démultiplexeur (C2C3) et reliées par une dite fibre de liaison (L2A3) associée à ce distributeur éclaté, ce démultiplexeur (C2C3) constituant une partie résidente de ladite matrice éclatée incluse dans ledit noeud (N2) associé à cette matrice (M2), ce multiplexeur (C2B3) et ledit groupe d'émetteurs (GE2A3) raccordés à ce multiplexeur constituant une partie exilée de cette matrice éclatée, cette partie exilée étant incluse dans un noeud d'accueil (N1) associé à une dite matrice composite (M1), ce noeud d'accueil étant constitué par un dit noeud raccordé directement par la dite fibre de liaison (L23A) au noeud (N2) associé à ladite matrice éclatée (M2), les émetteurs (E2A3, 1...E2A3, 4) inclus dans cette partie exilée étant alimentés électriquement par des entrées (P2A3,1) (voir figure 2A) munies de moyens de détection et d'amplification et alimentées optiquement par desdits filtres inclus dans ledit noeud d'accueil (N1), ledit multiplexeur (C2B3) comportant d'une part une succession d'entrées (1C2A3...4C2A3) constituant ladite succession d'entrées de ce distributeur éclaté (C2A3), ce multiplexeur comportant d'autre part une sortie (C2B3L) constituant une dite sortie de liaison de ce noeud associé (N2), ce démultiplexeur (C2C3) (voir figure 2B) comportant d'une part une entrée (C2C3L) constituant une dite entrée de liaison de ce noeud associé, d'autre part une succession de sorties (C2A3,1...C2A3,4) constituant ladite succession de sorties de ce distributeur éclaté, ladite sortie (C2B3L) du multiplexeur étant raccordée à ladite entrée (C2C3L) du démultiplexeur par ladite fibre de liaison (L2A3) associée à ce distributeur éclaté, de manière que plusieurs dites informations soient transmises simultanément par cette fibre avec multiplexage en longueurs d'onde entre ledit noeud associé (N2) et ledit noeud d'accueil (N1).

De préférence ledit noeud (N2) associé à ladite matrice éclatée (M2) est un noeud à accès local. Le groupe de distributeurs passifs (C2A1...C2A4) de cette matrice comporte alors en outre pour cela au moins un distributeur passif entièremement inclus dans ce noeud et constituant un distributeur intégré (C2A1, C2A2).

De préférence aussi ladite matrice éclatée (M2) comporte plusieurs distributeurs éclatés (C2A3, C2A4) formant plusieurs parties exilées (C2B3, fig 2A, C2B4, fig 2C) incluses dans plusieurs noeuds d'accueil (N1, N3) raccordés directement à cette matrice éclatée par plusieurs fibres de liaison (L2A3, L2A4), respectivement.

De préférence enfin le réseau comporte au moins deux matrices éclatées (M1, M2) et deux noeuds (N1, N2) associés respectivement à ces deux matrices, et au moins deux fibres de liaison (L2A3, L1A4) transmettant desdites informations entre ces deux noeuds dans deux directions opposées.

## Revendications

1. Réseau de transmission pour transmettre des informations entre des ports de communication pouvant être reliés à des abonnés à ce réseau, à l'aide d'ondes porteuses optiques guidées présentant une succession de longueurs d'onde porteuses, ce réseau comportant :
- une pluralité de noeuds (N1, ...N5) des organes pour assurer un routage commandé desdites ondes porteuses,
- et des fibres de liaison (L1A3...L3A4) constituées par des fibres optiques pour transmettre entre ces noeuds des informations portées par des dites ondes porteuses guidées par ces fibres,
- chacun desdits noeuds (N2) comportant :
- au moins une entrée de liaison (C2C3L) et/ou au moins une sortie de liaison (C3B3L) pour recevoir des informations d'un autre dit noeud (N1) et/ou pour émettre des informations vers un autre dit noeud (N3) par l'intermédiaire d'une dite fibre de liaison (L2A3, L3A3), respectivement,
- certains au moins desdits noeuds étant des noeuds à accès local (N2) comportant en outre au moins une entrée locale (P2A1,1...P2A2,4) et/ou au moins une sortie locale (Q2A1,1...Q2A2,4) pour constituer au moins un dit port de communication, certains desdits organes des noeuds de ce réseau étant commandés pour définir pour lesdites informations des routes s'étendant chacune d'une extrémité amont constituée par une dite entrée locale recevant cette information à une extrémité aval constituée par une dite sortie locale sur laquelle cette information doit être restituée par ce réseau de sorte que l'ensemble de ces organes constitue au moins une matrice de commutation (M2) de ce réseau, cette matrice comportant :
- un ensemble d'émetteurs (tels que E2A1,1) recevant des informations à transmettre et ayant des longueurs d'onde sur lesquelles ils émettent des ondes portant ces informations,
- un ensemble de filtres (tels que F2A1,1) ayant eux aussi des longueurs d'onde et transmettant chacun sélectivement en sortie de cette matrice les ondes dont la longueur d'onde est égale à sa longueur d'onde, les longueurs d'onde de ces filtres étant commandées,
- et un ensemble de distribution pour raccorder ces filtres à ces émetteurs de manière que ledit routage commandé puisse être assuré avec l'aide d'une commande des longeurs d'onde de ces filtres,
ce réseau étant caractérisé par le fait qu'au moins une dite matrice de commutation de ce réseau est une matrice composite dont ledit ensemble de distribution comporte :
- un groupe de distributeurs passifs (C2A1...C2A4), ces distributeurs raccordant chacun en permanence chacune de ses entrées à toutes ses sorties, ce groupe de distributeurs passifs étant raccordé audit ensemble d'émetteurs (E2A1, ...E2A4, 4)
- et un groupe de distributeurs actifs (X2A1...X2A4) aptes chacun à raccorder chacune de ses entrées à une sortie sélectionnée par une commande de ce distributeur, chacune des sorties de ce distributeur pouvant être sélectionnée, ce groupe de distributeurs actifs étant raccordé audit groupe de distributeurs passifs, ledit ensemble de filtres (F2A1, 1...F2A4,4) étant raccordé à la sortie de ce groupe de distributeurs actifs,
- au moins une dite matrice composite constituant une matrice éclatée (M2) comportant des organes (C2B3, C2C3) inclus dans deux dits noeuds différents (N1, N2) et raccordés par une dite fibre de liaison (L2A3) guidant des dites ondes porteuses présentant plusieurs dites longueurs d'onde porteuses différentes.

2. Réseau selon la revendication 1, caractérisé par le fait qu'au moins ledit groupe de distributeurs actifs (X2A1...X2A4) et ledit ensemble de filtres (F2A1, 1...F2A4, 4) de ladite matrice éclatée (M2) sont contenus dans un dit noeud (N2) associé à cette matrice, cette matrice éclatée comportant :
- un ensemble d'émetteurs (E2A1,1...,E2A4,4) constitué par une succession de groupes d'émetteurs (GE2A1...GE2A4) dans laquelle ces groupes ont des rangs respectifs (1...4), chaque dit groupe d'émetteurs (GE2A1) étant constitué d'émetteurs (E2A1,1...E2A1,4) se succèdant et ayant des rangs respectifs (1...4) dans ce groupe, chaque dit émetteur étant muni d'une entrée (P2A1,1...P2A1,4) de même rang pour recevoir une dite information, cette entrée constituant une entrée de ladite matrice éclatée (M2), cet émetteur étant piloté par cette information pour émettre une onde optique portant cette information et présentant une dite longueur d'onde porteuse constituant une longueur d'onde de cet émetteur,
- un groupe de distributeurs passifs (C2A1...C2A4) formant une sùccession dans laquelle ces distributeurs ont des rangs respectifs (1...4), chaque dit distributeur passif (C2A1) comportant une succession d'entrées (1C2A1...4C2A1) ayant des rangs (1....4) dans cette succession et raccordées chacune à l'émetteur qui a le même rang que cette entrée et qui appartient au groupe d'émetteurs de même rang que ce distributeur, ce distributeur formant un mélange de toutes ces ondes et comportant encore des sorties (C2A1,1...C2A1,4), transmettant chacune un groupe d'ondes constitué par une fraction de ce mélange,
- et un groupe de distributeurs actifs (X2A1...X2A4) se succèdant en ayant des rangs respectifs (1...4) dans ce groupe, chacun de ces distributeurs actifs (X2A1) comportant une succession d'entrées (1X2A1...4X2A1) ayant des rangs (1...4) dans cette succession et raccordées chacune à une sortie d'un dit distributeur passif ayant le même rang que cette entrée, chacun de ces distributeurs actifs comportant encore une succession de sorties (X2A1,1...X2A1,4) dans laquelle ces sorties ont des rangs respectifs (1...4), ce distributeur actif étant commandé lorsqu'il reçoit un dit groupe d'ondes optiques sur une de ses entrées pour sélectionner au moins une de ses dites sorties et pour transmettre ce groupe d'ondes optiques par sa dite sortie sélectionnée,
- un ensemble de filtres (F2A1,1...F2A4,4) constitué par une succession de groupes de filtres (GF2A1...GF2A4) dans laquelle ces groupes ont des rangs respectifs (1...4), chaque dit groupe de filtres (GF2A1) étant constitué de filtres (F2A1,1...F2A1,4) se succèdant et ayant des rangs respectifs (1...4) dans ce groupe, chacun des filtres (F2A1,1) de ce groupe étant raccordé à une sortie ayant le même rang que ce filtre et appartenant à un dit distributeur actif (X2A1) ayant le même rang que ce groupe, chacun de ces filtres ayant une longueur d'onde commandée constituée par une dite longueur d'onde porteuse, et alimentant une dite sortie (Q2A1, 1) de ladite matrice éclatée (M2) pour transmettre sélectivement en sortie de cette matrice des ondes dont la longueur d'onde est celle de ce filtre,
certains au moins desdits distributeurs passifs de cette matrice éclatée constituant des distributeurs éclatés (C2A3, C2A4), chaque dit distributeur éclaté (C2A3) comportant deux parties séparées constituant l'une un multiplexeur spectral (C2B3), l'autre un démultiplexeur (C2C3) et reliées par une dite fibre de liaison (L2A3) associée à ce distributeur éclaté, ce démultiplexeur (C2C3) constituant une partie résidente de ladite matrice éclatée incluse dans ledit noeud (N2) associé à cette matrice (M2), ce multiplexeur (C2B3) et ledit groupe d'émetteurs (GE2A3) raccordés à ce multiplexeur constituant une partie exilée de cette matrice éclatée, cette partie exilée étant incluse dans un noeud d'accueil (N1) associé à une dite matrice composite (M1), ce noeud d'accueil étant constitué par un dit noeud raccordé directement par la dite fibre de liaison (L23A) au noeud (N2) associé à ladite matrice éclatée (M2), les émetteurs (E2A3, 1...E2A3, 4) inclus dans cette partie exilée étant alimentés électriquement par des entrées (P2A3,1) munies de moyens de détection et d'amplification et alimentées optiquement par desdits filtres inclus dans ledit noeud d'accueil (N1), ledit multiplexeur (C2B3) comportant d'une part une succession d'entrées (1C2A3...4C2A3) constituant ladite succession d'entrées de ce distributeur éclaté (C2A3), ce multiplexeur comportant d'autre part une sortie (C2B3L) constituant une dite sortie de liaison de ce noeud associé (N2), ce démultiplexeur (C2C3) comportant d'une part une entrée (C2C3L) constituant une dite entrée de liaison de ce noeud associé, d'autre part une succession de sorties (C2A3,1...C2A3,4) constituant ladite succession de sorties de ce distributeur éclaté, ladite sortie (C2B3L) du multiplexeur étant raccordée à ladite entrée (C2C3L) du démultiplexeur par ladite fibre de liaison (L2A3) associée à ce distributeur éclaté, de manière que plusieurs dites informations soient transmises simultanément par cette fibre avec multiplexage en longueurs d'onde entre ledit noeud associé (N2) et ledit noeud d'accueil (N1).

3. Réseau selon la revendication 2, caractérisé par le fait que ledit noeud (N2) associé à ladite matrice éclatée (M2) est un dit noeud à accès local, ledit groupe de distributeurs passifs (C2A1...C2A4) de cette matrice comportant en outre pour cela au moins un dit distributeur passif entièremement inclus dans ce noeud et constituant un distributeur intégré (C2A1, C2A2).

4. Réseau selon la revendication 2, caractérisé par le fait que ladite matrice éclatée (M2) comporte plusieurs dits distributeurs éclatés (C2A3, C2A4) formant plusieurs dites parties exilées (C2B3, C2B4) incluses dans plusieurs dits noeuds d'accueil (N1, N3) raccordés directement à cette matrice éclatée par plusieurs dites fibres de liaison (L2A3, L2A4), respectivement.

5. Réseau selon la revendication 4, caractérisé par le fait qu'il comporte au moins deux dites matrices éclatées (M1, M2) et deux noeuds (N1, N2) associés respectivement à ces deux matrices, et au moins deux dites fibres de liaison (L2A3, L1A4) transmettant desdites informations entre ces deux noeuds dans deux directions opposées.

## Patentansprüche

1. Übertragungsnetzwerk zum Übertragen von Informationen zwischen Kommunkationsanschlüssen, die mit Teilnehmern dieses Netzwerks verbunden sein können, mit Hilfe von geleiteten optischen Trägerwellen, die eine Folge von Trägerwellenlängen aufweisen, wobei dieses Netzwerk aufweist:
- eine Vielzahl von Knoten (N1, ...N5) von Elementen zum Sicherstellen einer gesteuerten Wegesuche für die Trägerwellen,
- und Verbindungsfasern (L1A3...L3A4), die aus Lichtwellenleitern bestehen, um zwischen diesen Knoten Informationen zu übertragen, die von den von diesen Fasern geleiteten Trägerwellen getragen werden,
- wobei jeder der Knoten (N2) aufweist:
- wenigstens einen Verbindungseingang (C2C3L) und/oder wenigstens einen Verbindungsausgang (C3B3L), um jeweils über eine Verbindungsfaser (L2A3, L3A3) Informationen von einem anderen Knoten (N1) zu empfangen und/oder Informationen zu einem anderen Knoten (N3) zu senden,
- wobei wenigstens einige der Knoten Knoten (N2) mit lokalem Zugang sind, die außerdem wenigstens einen lokalen Eingang (P2A1,1...P2A2,4) und/oder wenigstens einen lokalen Ausgang (Q2A1,1...Q2A2,4) aufweisen, um wenigstens einen Kommunikationsanschluß zu bilden, wobei einige der Elemente der Knoten dieses Netzwerks so gesteuert werden, daß für die Informationen Wege definiert werden, die sich jeweils von einem stromaufwärtigen Ende, das aus einem lokalen Eingang besteht, der diese Information empfängt, zu einem stromabwärtigen Ende erstrecken, das aus einem lokalen Ausgang besteht, an welchem diese Information von diesem Netzwerk rekonstruiert werden muß, so daß die Gesamtheit dieser Elemente wenigstens eine Schaltmatrix (M2) dieses Netzwerks bildet, wobei diese Matrix aufweist:
- einen Aufbau von Sendern (wie E2A1,1), die zu übertragende Informationen empfangen und Wellenlängen besitzen, auf welchen sie Wellen senden, die diese Informationen tragen,
- eine Aufbau von Filtern (wie F2A1,1), die auch Wellenlängen besitzen und jeweils selektiv am Ausgang dieser Matrix die Wellen übertragen, deren Wellenlängen gleich ihrer Wellenlänge ist, wobei die Wellenlängen dieser Filter gesteuert werden,
- und einen Verteilungsaufbau, um diese Filter mit diesen Sendern zu verbinden, so daß die gesteuerte Wegesuche mit Hilfe einer Steuerung der Wellenlängen dieser Filter sichergestellt werden kann,
**dadurch gekennzeichnet**, daß wenigstens eine
Schaltmatrix dieses Netzwerks eine zusammengesetzte Matrix ist, deren Verteilungsaufbau aufweist:
- eine Gruppe von passiven Verteilern (C2A1...C2A4), wobei diese Verteiler jeweils dauerhaft jeden ihrer Eingänge mit allen ihren Ausgängen verbinden, wobei diese Gruppe von passiven Verteilern mit dem Aufbau von Sendern (E2A1,...E2A4, 4) verbunden ist,
- und eine Gruppe von aktiven Verteilern (X2A1...X2A4), die jeweils dafür geeignet sind, jeden ihrer Eingänge durch eine Steuerung dieses Verteilers mit einem ausgewählten Ausgang zu verbinden, wobei jeder der Ausgänge dieses Verteilers ausgewählt werden kann, wobei diese Gruppe von aktiven Verteilern mit der Gruppe von passiven Verteilern verbunden ist, wobei der Aufbau von Filtern (F2A1, 1...F2A4,4) mit dem Ausgang dieser Gruppe von aktiven Verteilern verbunden ist,
- wenigstens eine zusammengesetzte Matrix, die eine verstreute (éclatée) Matrix (M2) bildet, die Elemente (C2B3, C2C3) aufweist, die in zwei verschiedenen Knoten (N1, N2) eingeschlossen und durch eine Verbindungsfaser (L2A3) verbunden sind, die Trägerwellen leitet, die mehrere verschiedene Trägerwellenlängen aufweisen.

2. Netzwerk nach Anspruch 1, dadurch gekennzeichnet, daß wenigstens die Gruppe von aktiven Verteilern (X2A1...X2A4) und der Aufbau von Filtern (F2A1, 1...F2A4, 4) der verstreuten Matrix (M2) in einem zu dieser Matrix gehörigen Knoten (N2) enthalten sind, wobei diese verstreute Matrix aufweist:
- einen Aufbau von Sendern (E2A1,1...,E2A4,4), der aus einer Folge von Sendergruppen (GE2A1...GE2A4) besteht, in welcher diese Gruppen die jeweiligen Ränge (1...4) haben, wobei jede Sendergruppe (GE2A1) aus Sendern (E2A1,1...E2A1,4) besteht, die aufeinanderfolgen und in dieser Gruppe die jeweiligen Ränge (1...4) haben, wobei jeder Sender mit einem Eingang (P2A1,1...P2A1,4) mit dem gleichen Rang versehen ist, um eine Information zu empfangen, wobei dieser Eingang einen Eingang der verstreuten Matrix (M2) bildet, wobei dieser Sender von dieser Information so gesteuert wird, daß er eine optische Welle aussendet, die diese Information trägt und eine Trägerwellenlänge aufweist, die eine Wellenlänge dieses Senders bildet,
- eine Gruppe von passiven Verteilern (C2A1...C2A4), die eine Folge bilden, in welcher diese Verteiler die jeweiligen Ränge (1...4) haben, wobei jeder passive Verteiler (C2A1) eine Folge von Eingängen (1C2A1...4C2A1) aufweist, die in dieser Folge die Ränge (1...4) haben und jeweils mit dem Sender verbunden sind, der den gleichen Rang wie dieser Eingang hat und der zu der Sendergruppe mit dem gleichen Rang wie dieser Verteiler gehört, wobei dieser Verteiler eine Mischung aller dieser Wellen bildet und noch Ausgänge (C2A1,1...C2A1,4) aufweist, die jeweils eine von einem Teil dieser Mischung gebildete Wellengruppe übertragen,
- und eine Gruppe von aktiven Verteilern (X2A1...X2A4), die aufeinanderfolgen, wobei sie in dieser Gruppe die jeweiligen Ränge (1...4) haben, wobei jeder dieser aktiven Verteiler (X2A1) eine Folge von Eingängen (1X2A1...4X2A1) aufweist, die in dieser Folge die Ränge (1...4) haben und jeweils mit einem Ausgang eines passiven Verteilers verbunden sind, der den gleichen Rang wie dieser Eingang hat, wobei jeder dieser aktiven Verteiler noch eine Folge von Ausgängen (X2A1,1...X2A1,4) aufweist, in welcher diese Ausgänge die jeweiligen Ränge (1...4) haben, wobei dieser aktive Verteiler, wenn er auf einem seiner Eingänge eine Gruppe von optischen Wellen empfängt, so gesteuert wird, daß er wenigstens einen seiner Ausgänge auswählt und diese Gruppe von optischen Wellen über seinen ausgewählten Ausgang überträgt,
- einen Aufbau von Filtern (F2A1,1...F2A4,4), der aus einer Folge von Filtergruppen (GF2A1...GF2A4) besteht, in welcher diese Gruppen die jeweiligen Ränge (1...4) haben, wobei jede Filtergruppe (GF2A1) aus Filtern (F2A1,1...F2A1,4) besteht, die aufeinanderfolgen und in dieser Gruppe die jeweiligen Ränge (1...4) haben, wobei jeder der Filter (F2A1,1) dieser Gruppe mit einem Ausgang verbunden ist, der den gleichen Rang wie dieser Filter hat und zu einem aktiven Verteiler (X2A1) gehört, der den gleichen Rang wie diese Gruppe hat, wobei jeder dieser Filter eine aus einer Trägerwellenlänge bestehende, gesteuerte Wellenlänge hat und einen Ausgang (Q2A1, 1) der verstreuten Matrix (M2) versorgt, um am Ausgang dieser Matrix selektiv Wellen zu übertragen, deren Wellenlänge diejenige dieses Filters ist, wobei wenigstens einige dieser passiven Verteiler dieser verstreuten Matrix verstreute Verteiler (C2A3, C2A4) bilden, wobei jeder verstreute Verteiler (C2A3) zwei getrennte Teile aufweist, wovon der eine einen spektralen Multiplexer (C2B3), der andere einen Demultiplexer (C2C3) bildet und die durch eine zu diesem verstreuten Verteiler gehörigen Verbindungsfaser (L2A3) verbunden sind, wobei dieser Demultiplexer (C2C3) einen residenten Teil der verstreuten Matrix bildet, der in dem zu dieser Matrix (M2) gehörigen Knoten (N2) eingeschlossen ist, wobei dieser Multiplexer (C2B3) und die Sendergruppe (GE2A3), die mit diesem Multiplexer verbunden ist, einen aus dieser verstreuten Matrix ausgeschlossenen Teil bildet, wobei dieser ausgeschlossene Teil in einem zu einer zusammengesetzten Matrix (M1) gehörigen Empfangsknoten (N1) eingeschlossen ist, wobei dieser Empfangsknoten aus einem Knoten besteht, der durch die Verbindungsfaser (L23A) direkt mit dem zur verstreuten Matrix (M2) gehörigen Knoten (N2) verbunden ist, wobei die in diesem ausgeschlossenen Teil eingeschlossenen Sender (E2A3, 1...E2A3, 4) von den Eingängen (P2A3,1) elektrisch versorgt werden, die mit Mitteln zur Erfassung und Verstärkung versehen sind und von den im Empfangsknoten (N1) eingeschlossenen Filtern optisch versorgt werden, wobei der Multiplexer (C2B3) einerseits eine Folge von Eingängen (1C2A3...4C2A3) aufweist, die die Folge von Eingängen dieses verstreuten Verteilers (C2A3) bilden, wobei dieser Multiplexer andererseits einen Ausgang (C2B3L) aufweist, der einen Verbindungsausgang dieses zugehörigen Knoten (N2) bildet, wobei dieser Demultiplexer (C2C3) einerseits einen Eingang (C2C3L), der einen Verbindungseingang dieses zugehörigen Knotens bildet, andererseits eine Folge von Ausgängen (C2A3,1...C2A3,4) aufweist, die die Folge von Ausgängen dieses verstreuten Verteilers bilden, wobei der Ausgang (C2B3L) des Multiplexers mit dem Eingang (C2C3L) des Demultiplexers durch die Verbindungsfaser (L2A3) verbunden ist, die zu diesem verstreuten Verteiler gehört, so daß durch diese Faser mit einer Wellenlängenmultiplexierung zwischen dem zugehörigen Knoten (N2) und dem Empfangsknoten (N1) gleichzeitig mehrere Information übertragen werden.

3. Netzwerk nach Anspruch 2, dadurch gekennzeichnet, daß der zur verstreuten Matrix (M2) gehörige Knoten (N2) ein Knoten mit lokalem Zugang ist, wobei die Gruppe von passiven Verteilern (C2A1...C2A4) dieser Matrix außerdem dafür wenigstens einen passiven Verteiler aufweist, der vollständig in diesen Knoten eingeschlossen ist und einen integrierten Verteiler (C2A1, C2A2) bildet.

4. Netzwerk nach Anspruch 2, dadurch gekennzeichnet, daß die verstreute Matrix (M2) mehrere verstreute Verteiler (C2A3, C2A4) aufweist, die mehrere ausgeschlossene Teile (C2B3, C2B4) bilden, die in mehreren Empfangsknoten (N1, N3) eingeschlossen sind, die jeweils durch mehrere Verbindungsfasern (L2A3, L2A4) direkt mit dieser verstreuten Matrix verbunden sind.

5. Netzwerk nach Anspruch 4, dadurch gekennzeichnet, daß es wenigstens zwei verstreute Matrices (M1, M2) und zwei jeweils zu diesen beiden Matrices gehörige Knoten (N1, N2) und wenigstens zwei Verbindungsfasern (L2A3, L1A4) aufweist, die Informationen zwischen diesen beiden Knoten in zwei entgegengesetzten Richtungen übertragen.

## Claims

1. A transmission network for transmitting data between call ports that can be connected to subscribers to the network by means of guided carrier light waves having a succession of carrier wavelengths. the network including:
a plurality of nodes (N1, ..., N5) comprising members for performing controlled routing so as to route said carrier waves on command; and
link fibers (L1A3, ... L3A4) constituted by optical fibers for conveying data between the nodes, which data is carried by said carrier waves guided by the fibers;
each of said nodes (N2) including:
at least one link input (C2C3L) and/or at least one link output (C3B3L) for receiving data from another one of said nodes (N1) and/or for transmitting data to another one of said nodes (N3) via respective ones of said link fibers (L2A3, L3A3);
at least some of said nodes being local access nodes (N2), each of which further includes at least one local input (P2A1,1 ..., P2A2,4) and/or at least one local output (Q2A1,1, ..., Q2A2,4) so as to constitute at least one of said call ports, some of said members of the nodes of the network being controlled so as to define routes for said data, each of which routes extends from an upstream end constituted by one of said local inputs receiving the data to a downstream end constituted by one of said local outputs via which the data is to be restored by the network, so that the members in question comprise a set of members constituting at least one switching matrix (M2) of the network, the matrix including:
a set of emitters (such as E2A1,1) receiving data to be transmitted and having wavelengths at which they emit waves carrying the data;
a set of filters (such as F2A1, 1) also having wavelengths, each of which filters selectively transmits, at the output of the matrix, those waves whose wavelength is equal to the wavelength of the filter, the wavelengths of the filters being controlled; and
a distribution set for connecting the filters to the emitters so that said controlled routing can be performed by controlling the wavelengths of the filters;
the network being characterized by the fact that at least one of said switching matrices of the network is a composite matrix whose distribution set includes:
a group of passive distributors (C2A1, ..., C2A4), each of the distributors permanently connecting each of its inputs to all of its outputs, the group of passive distributors being connected to said set of emitters (E2A1, ..., E2A4,4); and
a group of active distributors (X2A1, ..., X2A4), each of which is capable of connecting each of its inputs to an output selected by the distributor being controlled, it being possible to select any one of the outputs of the distributor, the group of active distributors being connected to said group of passive distributors, said set of filters (F2A1,1 ..., F2A4,4) being connected to the output of the group of active distributors;
at least one of said composite matrices constituting a split matrix (M2) comprising members (C2B3, C2C3) that are included in two different nodes (N1, N2) and that are connected together via one of said link fibers (L2A3) guiding carrier waves that have a plurality of different carrier wavelengths.

2. A network according to claim 1, characterized by the fact that at least said group of active distributors (X2A1, ..., X2A4) and said set of filters (F2A1,1, F2A4,4) of said split matrix (M2) are contained in one of said nodes (N2) that is associated with the matrix, the split matrix including:
a set of emitters (E2A1,1, ..., E2A4,4) constituted by a succession of groups of emitters (GE2A1, ..., GE2A4) in which the groups have respective ranks (1, ..., 4), each of said groups of emitters (GE2A1) being constituted by emitters (E2A1,1, ..., E2A1, 4) in succession and having respective ranks (1, ..., 4) in the group, each of said emitters being provided with an input (P2A1,1 ..., P2A1,4) of the same rank for receiving an item of said data, the input constituting an input of said split matrix (M2), the emitter being controlled by the item of data so as to emit a light wave carrying the item of data and having one of said carrier wavelengths constituting a wavelength of the emitter;
a group of passive distributors (C2A1, ..., C2A4) forming a succession in which the distributors have respective ranks (1, ..., 4), each of said passive distributors (C2A1) including a succession of inputs (1C2A1, ..., 4C2A1) having ranks (1, ..., 4) in the succession, each input being connected to the emitter which has the same rank as the input and which belongs to the group of emitters having the same rank as the distributor, the distributor forming a mixture of all the waves, and further including outputs (C2A1,1 ..., C2A1,4), each of which transmits a group of waves constituted by a fraction of the mixture; and
a group of active distributors (X2A1, ..., X2A4) in succession and having respective ranks (1, ..., 4) in the group, each of the active distributors (X2A1) including a succession of inputs (1X2A1. ..., 4X2A1) having ranks (1, ..., 4) in the succession, each input being connected to an output of one of said passive distributors that has the same rank as the input, each of the active distributors further including a succession of outputs (X2A1,1, ..., X2A1,4), in which succession the outputs have respective ranks (1, ..., 4), the active distributor being controlled when it receives one of said groups of light waves via one of its inputs so as to select at least one of its outputs and so as to transmit the group of light waves via its selected output;
a set of filters (F2A1,1, ..., F2A4,4) constituted by a succession of groups of filters (GF2A1, ..., GF2A4), in which succession the groups have respective ranks (1, ..., 4), each of said groups of filters (GF2A1) being constituted by filters (F2A1,1, ..., F2A1,4) in succession and having respective ranks (1, ..., 4) in the group, each of the filters (F2A1,1) of the group being connected to an output having the same rank as the filter and belonging to one of said active distributors (X2A1) that has the same rank as the group, each of the filters having a controlled wavelength constituted by one of said carrier wavelengths, and feeding one of said outputs (Q2A1,1) of said split matrix (M2) so as to transmit selectively, at the output of the matrix, waves whose wavelength is that of the filter, at least some of said passive distributors of the split matrix constituting split distributors (C2A3, C2A4), each said split distributor (C2A3) comprising two separate portions, one portion constituting a wavelength multiplexer (C2B3), and the other portion constituting a demultiplexer (C2C3), the two portions being connected together via one of said link fibers (L2A3) that is associated with the split distributor, the demultiplexer (C2C3) constituting a resident portion of said split matrix, which portion is included in said node (N2) associated with the matrix (M2), and the multiplexer (C2B3) and said group of emitters (GE2A3) connected to the multiplexer constituting an exiled portion of the split matrix, the exiled portion being included in a host node (N1) associated with one of said composite matrices (M1), the host node being constituted by one of said nodes that is connected directly via said link fiber (L23A) to the node (N2) associated with said split matrix (M2), the emitters (E2A3,1, ..., E2A3,4) included in the exiled portion being electrically fed via inputs (P2A3,1) provided with detection and amplification means and optically fed via said filters included in said host node (N1), said multiplexer (C2B3) firstly including a succession of inputs (1C2A3, ..., 4C2A3) constituting said succession of inputs of the split distributor (C2A3). the multiplexer secondly including an output (C2B3L) constituting one of said link outputs of the associated node (N2), the demultiplexer (C2C3) including firstly an input (C2C3L) constituting one of said link inputs of the associated node. and secondly a succession of outputs (C2A3,1, ..., C2A3,4) constituting said succession of outputs of the split distributor, said output (C2B3L) of the multiplexer being connected to said input (C2C3L) of the demultiplexer via said link fiber (L2A3) associated with the split distributor, so that a plurality of said items of data are transmitted simultaneously between said associated node (N2) and said host node (N1) by means of wavelength multiplexing and via the fiber.

3. A network according to claim 2, characterized by the fact that said node (N2) associated with said split matrix (M2) is one of said local access nodes, said group of passive distributors (C2A1, ..., ..., C2A4) of the matrix further including, for the purpose of local access, at least one of said passive distributors entirely included in the node and constituting an integrated distributor (C2A1, C2A2).

4. A network according to claim 2, characterized by the fact that said split matrix (M2) includes a plurality of said split distributors (C2A3, C2A4) forming a plurality of said exiled portions (C2B3) included in a plurality of said host nodes (N1, N3) connected directly to the split matrix via a plurality of respective link fibers (L2A3, L2A4).

5. A network according to claim 4, characterized by the fact that it includes at least two of said split matrices (M1, M2) and two nodes (N1, N2) respectively associated with the two matrices, and at least two of said link fibers (L2A3, L1A4) conveying said data between the two nodes in two opposite directions.
